# EUROPEAN PATENT SPECIFICATION

(11) **EP 4 097 170 B1**
(45) Date of publication and mention of the grant of the patent: **22.07.2026**
(21) Application number: 21704127.6
(22) Date of filing: 14.01.2021
(51) Int. Cl.: C08G 77/14, C08G 77/16, C08G 77/18, C08L 83/06, C09D 5/16, C09D 5/44, C09D 183/04, C09D 183/06

(54) **HYDROPHOBIC COATING COMPOSITIONS BASED ON ORGANIC BINDERS**
HYDROPHOBE BESCHICHTUNGSZUSAMMENSETZUNG AUF DER BASIS VON ORGANISCHEN BINDEMITTELN
COMPOSITIONS DE REVÊTEMENT HYDROPHOBES À BASE DE LIANTS ORGANIQUES

(30) Priority: 27.01.2020 US 202062966133 P
(43) Date of publication of application: 07.12.2022
(73) Proprietor: Momentive Performance Materials Inc., Waterford, NY 12188 (US)
(72) Inventor: TIWARY, Yogesh, Bangalore 560035 (IN); RAUT, Devyani, Bangalore 560100 (IN); ENGELHARDT, Jan, 51368 Leverkusen (DE); FELDER, Thorsten, 51368 Leverkusen (DE); HEPPERLE, Johannes, 51368 Leverkusen (DE); WITOSSEK, Anita, 40764 Langenfeld (DE); HERMANN, Jörg, 47299 Leichlingen (DE)
(74) Representative: Gille Hrabal Partnerschaftsgesellschaft mbB Patentanwälte
(86) International application number: PCT/US2021/013389
(87) International publication number: WO 2021/154501

(56) References cited:
- US-A1- 2003 114 583
- US-A1- 2006 225 612
- US-A1- 2019 092 904
- US-A1- 2019 112 502

## Description

### FIELD OF THE INVENTION

The present invention relates to coating compositions, for example paint compositions which are based on organic binders and a blend of reactive siloxane-based components and which can be used in architectural and/or industrial applications.

### DESCRIPTION OF THE RELATED ART

Paint compositions based on organic binders are popular for architectural and industrial applications. Binder is the main ingredient of paints. Binders are polymers (resins) forming a continuous film on the substrate surface. Binders are responsible for good adhesion of the coating to the substrate. The binder holds the pigment particles distributed throughout the coating. The binder is dispersed in a carrier (water or organic solvent either in molecular form (true solutions) or as colloidal dispersions (emulsions or sols). Common organic binders used for such paint compositions have varying degrees of hydrophobicity, which depend on binder chemistry, filler type and loading, and the presence of other additives. Paint formulations have varying degree of easy removal of stains or graffiti, microbial resistance, durability and other related benefits.

Graffiti damage has been an increasingly growing concern. Today most people view graffiti not as an art form but as a form of vandalism and property destruction when the graffiti is not desired. Graffiti is mostly found in institutions such as schools, public and private buildings, automobiles, trucks, trains, cars and public rest rooms and, in open areas such as support walls for bridges, inner walls of buildings and park structures. The vast majority of graffiti is created with oil-based paints including enamels, epoxies, lacquers and urethanes, which are applied by spray cans. Conventionally, removal of unwanted graffiti has been performed by sandblasting the graffiti from the substrate. However, this method is expensive and hazardous to health due to the emission of potential carcinogenic particles. Moreover, the method causes damage to the paint surface. No long-term solutions are offered by the use of this method and the surface will likely be repainted with new damaging graffiti.

Another method commonly used is by treating the substrate with chemicals. In this case, the chemicals often destroy the surface and, are generally hazardous, as they require handling with highly caustic solutions. The search for more ecofriendly solutions is highly desired. On the other hand, household and exterior stains in architectural paints are usually removed by soap, water or high pressure washing with water. It is desired to have inhered stain resistance or easy-clean properties in such paints for lower maintenance needs.

Some stains can be resisted by higher hydrophobicity, and one way of enhancing that is to add silicone-based compounds/additives to the paint. Silicones were used in this objective in one example in U.S. Patent No. 4,833,187. These silicones were based on functionalized polydimethylsiloxanes (PDMS) or PDMS-organic hybrids, and were generally not reactive with the organic binder (the functional group of PDMS cannot chemically react with a functional group of the binder) and have consequently some disadvantages such as blooming and leaching to the surface causing oily patches or tackiness on a paint film, which will not give consistent and durable paint performance. Hence these silicones have attained only limited acceptance as compounds to be incorporated into architectural or industrial paints.

The U.S. Patent No 2019/112502 describes a curable composition used for producing a coating system having anti-adhesive, anti-soiling and anti-graffiti properties comprising a film-forming polymer such as PU, polyester or epoxy resin and a functionalised hydrolysable linear or branched organopolysiloxane functionalised by reactive groups such as hydroxyl, alkylether, hydroxyethylpropyl ether, alkoxyl or Si(OR)₃. In particular, a composition comprising an epoxy resin, an organopolysiloxane having an hydroxyethylpropyl ether group, an oroganopolysiloxane having glycidyl groups and a curing agent as hardener is described.

The U.S. Patent No 2019/092904 describes a curable composition used for the preparattion of coatings or paints for prevention or reduction of biofouling and comprising an organopolysiloxane, a polyurethane or polyether and a curing catalyst.

The U.S. Patent No 2006/225612 describes a process for producing an epoxy silane oligomer and its use in coating compositions for preparing coatings, sealants or adhesives and exhibiting good corrosion resistance, adhesion and weathering behaviours. The epoxy silane oligomers are used as additives in acrylic latex-based paint formulations. Finally, the U.S. Patent No 2003/114583 describes the preparation of coating compositions (paints) having good hydrophobic, water-repellent , non-soiling and weathering-resistance properties, wherein the compositions comprise a functionalised copolymer which is hydrophobised with silicones in the form of aqueous dispersions or water-redispersible powders. These copolymers are prepared by copolymerisation of a vinyl ester monomer, a silicone comprising at least one polymerisation group, ethylenically unsaturated hydrolysable silicone compounds and ethylenically unsaturated epoxy compounds.

### SUMMARY OF THE INVENTION

The inventors herein have surprisingly discovered that the coating composition of the present invention exhibits an increase in hydrophobicity and/or good anti-graffiti and/or easy stain removal, by employing a combination of the components (b) (i) (hydrolyzable or hydrolyzed polysiloxane and (ii) epoxy-functional siloxanes as described herein. The inventors observed a synergism resulting in a greater hydrophobic property in the coating composition when using the herein described combination of (b) (i) and (ii), than the individual effect of these components alone.

There is provided herein a coating composition according to claim 1 comprising (a) an organic binder;
and, (b) a combination of (i) a hydrolyzable or hydrolyzed polysiloxane, and (ii) an epoxy-functional polysiloxane, and optionally a hardener.

### DETAILED DECRIPTION OF THE INVENTION

In one embodiment herein, it will be understood that all ranges herein include all subranges there between. In another specific embodiment herein, it will be understood that all listings of members of a group can further comprise combinations of any two or more of the members of said group.

In the specification and claims herein, the following terms and expressions are to be understood as indicated.

The singular forms "a," "an," and "the" include the plural, and reference to a particular numerical value includes at least that particular value, unless the context clearly dictates otherwise.

All methods described herein may be performed in any suitable order unless otherwise indicated herein or otherwise clearly contradicted by context. The use of any and all examples, or exemplary language (e.g., "such as") provided herein, is intended merely to better illustrate the invention and does not pose a limitation on the scope of the invention unless otherwise claimed.

No language in the specification should be construed as indicating any non-claimed element as essential to the practice of the invention.

The terms, "comprising," "including," "containing," "characterized by," and grammatical equivalents thereof are inclusive or open-ended terms that do not exclude additional, unrecited elements or method steps, but will also be understood to include the more restrictive terms "consisting of" and "consisting essentially of."

It will be further understood that any compound, material or substance which is expressly or implicitly disclosed in the specification and/or recited in a claim as belonging to a group of structurally, compositionally and/or functionally related compounds, materials or substances includes individual representatives of the group and all combinations thereof.

The term "alkyl" means any monovalent, saturated straight, branched or cyclic hydrocarbon group. Examples of alkyls include methyl, ethyl, propyl and isobutyl.

It will be understood herein that the term "combination" as it relates to the expression "combination of (i) hydrolyzable or hydrolyzed polysiloxane, and (ii) epoxy-functional polysiloxane" is non-limiting as regards the composition of, or the making of the combination, i.e., the components (b)(i) and (ii) may be present/mixed together prior to, during or after the addition of the organic binder (a), or alternatively, one of the components (i) and (ii) may be added separately to the organic binder (a), followed by subsequent addition of the other component thereto.

The present invention relates to a coating composition which is resistant against graffiti or household/exterior stains. There is provided herein a coating composition comprising (a) an organic binder; and, a combination of components (b)(i) a hydrolyzable or hydrolyzed polysiloxane, and (ii) an epoxy-functional polysiloxane,
wherein the organic binder (a) is selected from the group consisting of acrylic resins, vinyl-acrylic resins, vinyl acetate/ethylene (VAE), alkyd resins, polyurethane (urethane resins), epoxy resins, latex, asphaltic, polyester, melamine-formaldehyde, phenol formaldehyde, polyamide, isocyanate, synthetic or natural resins such as alkyds, melamine resin such as melamine alkyd, and combinations thereof,
and wherein the (b)(i) hydrolyzable or hydrolyzed polysiloxane contains at least one -Si(R)3-x(OR*)x functionality wherein each R is alkyl of from 1 to 6 carbon atoms, and R* is independently H or alkyl of from 1 to about 6 carbon atoms, at least one -Si(R)3-x(OR*)x functionality wherein each R is alkyl of from 1 to 6 carbon atoms, preferably from 1 to 3 carbon atoms, and x is an integer of from 1 to 3.

In one embodiment the organic binder (a) can be a water-soluble or water dispersible acrylic or acetate. A preferable acrylic binder is formed from mono-ethylenically unsaturated acid free monomers comprising C₁-C₄ alkyl esters of acrylic or methacrylic acids such as methyl acrylate, ethyl acrylate, butyl acrylate, methyl methacrylate, ethyl methacrylate, butyl methacrylate, isobutyl methacrylate, ethyl hexylacrylate; hydroxyalkyl esters of acrylic or methacrylic acids such as hydroxyethyl acrylate, hydroxypropyl acrylate, hydroxyethyl methacrylate and hydroxypropyl methacrylate; acrylamides and alkyl-substituted acrylamides including acrylamide, methacrylamide, N-tertiarybutylacrylamide, N-methacrylamide and N,N-dimethacrylamide, dimethylaminoethyl acrylate, dimethylaminoethyl methacrylate; acrylonitrile and methacrylonitrile. The monoethylenically-unsaturated acid free monomer may include the vinyl monomer styrene so as to form a copolymer or may be formed solely from styrene.

Preferred examples of acid free monomers include butyl acrylate, methyl methacrylate, ethyl hexylacrylate, styrene, vinyl toluene, acrylonitrile, vinyl acetate, acrylic acid, vinyl ester of Versatic acid , silane-containing monomer and combinations thereof.

In another embodiment, the organic binder (a) can be a waterborne/water-dispersible polymer such as a latex binder, such as natural latex, neoprene latex, nitrile latex, acrylic latex, vinyl acrylic latex, styrene acrylic latex, styrene butadiene latex, or the like. The coating compositions herein may include a single binder or a mixture of two or more organic binders that may be of the same class or different.

In one embodiment, the organic binder can be an organic solvent-based epoxy resin, e.g. phenol-formaldehyde epoxy resin which can further react with a hardener component, such as a polyamine or react with itself by ring-opening polymerization. In one embodiment the hardener (used to cure the coating) can be selected from the group of polyamines including aromatic or aliphatic diamines or oligo-amines such as 1,2-diaminocyclohexane, 4,4'-diaminodiphenylsulfon 1,5-diamino-2-methylpentane, diethylenetriamine, hexamethylenediamine, isophorondiamine, triethylenetetramine.

The organic binder (a) can also be an alkyd resin which may be complex branched and cross-linked polyesters having unsaturated aliphatic acid residues. The organic binder (a) can also be a polyurethane binder wherein such urethane resin binders typically comprise the reaction product of a polyisocyanate, and a polyol. In one embodiment, the organic binder (a) can be a polyol-based acrylate, such as a hydroxyacrylate or hydroxymethacrylate polymer or oligomer. The hydroxyacrylate or hydroxymethacrylate pre-polymer or -oligomer can be derived from homo- or co-polymerization of hydroxyalkyl acrylates and methacrylates including 2-hydroxyethyl acrylate, 2-hydroxyethyl methacrylate and their corresponding alkyl derivatives such as propyl and butyl derivatives. Also included are monomethacrylate and monoacrylates of diethylene glycol, glycerol, trimethylol propane and pentaerythritol. Further examples include di- and triacrylates and methacrylates of the above-mentioned glycols provided that at least one free hydroxy group remains for reactions with functional isocyanate groups. Further hydroxy acrylates include N-hydroxymethyl methacrylamide and N-hydroxymethyl acryl amide. Furthermore the hydroxyacrylate or hydroxymethacrylate pre-polymer or -oligomer can be a copolymer obtained by reaction of hydroxyacrylates or hydroxymethacrylates with mono-, di, tri or oligo- ethylenically unsaturated acid-free monomers such as monomers comprising C₁-C₄ alkyl esters of acrylic or methacrylic acids such as methyl acrylate, ethyl acrylate, butyl acrylate, methyl methacrylate, ethyl methacrylate, butyl methacrylate, isobutyl methacrylate, ethyl hexylacrylate; hydroxyalkyl esters of acrylic or methacrylic acids such as hydroxyethyl acrylate, hydroxypropyl acrylate, hydroxyethyl methacrylate and hydroxypropyl methacrylate; acrylamides and alkyl-substituted acrylamides including acrylamide, methacrylamide, N-tertiarybutylacrylamide, N-methacrylamide and N,N-dimethacrylamide, dimethylaminoethyl acrylate, dimethylaminoethyl methacrylate, acrylonitrile and methacrylonitrile. The monoethylenically unsaturated acid free monomer may include the vinyl monomer styrene.

In some embodiments the binder may need to be combined with a hardener to enable film formation. In the following, the term hardener is used to describe reactive compounds, having two or more functional groups, which react with, and crosslink the binder but are not limited to the reaction with the binder. The main purpose of the hardener is, but is not limited to, the crosslinking of the binder.

The organic binder (a) can be present in the coating composition in an amount of from about 5 wt.% to about 99 wt.% , preferably about 7 wt.% to about 95 wt.%, and more preferably about 10 wt.% to about 90 wt.% and even more preferably about 15 w% to about 80 wt.% with the weight percents being based on the total weight of the coating/paint composition.

### Hydrolyzable or hydrolyzed polysiloxane (b)(i)

The hydrolyzable or hydrolyzed polysiloxane (b)(i) is a polysiloxane containing at least one -Si(R)₃₋ₓ(OR*)ₓ functionality wherein each R is alkyl of from 1 to 6 carbon atoms, preferably from 1 to 3 carbon atoms, and R* is independently H or alkyl of from 1 to about 6 carbon atoms, preferably from 1 to 3 carbon atoms, and x is an integer of from 1 to 3, preferably 3.

In another embodiment herein, the hydrolyzable or hydrolyzed polysiloxane (b)(i) is chosen so that the foregoing silicone has a weight average molecular weight in the range of from about 200 to about 10,000, such as from about 800 to about 5,000, and viscosity of from about 2 cps to about 2,500 cps, preferably from about 2 cps to about 1800 cps, more preferably from about 5 cps to about 1700 cps and most preferably from about 10 to about 1600 cps. As described herein, viscosities are measured at 25°C with a rotary viscosimeter at a shear rate of 10 s⁻¹.

In certain embodiments, the hydrolyzable or hydrolyzed polysiloxane (b)(i) is of the general formula (I):

MₐD_{b}D_{c}*TₑT*_{f}M*_{d} (I)

wherein:
M = SiR¹R²R³O_{1/2};
M* = SiR⁴R⁵(OR*)O_{1/2;}
D = SiR⁶R⁷O_{2/2};
D*=SiR⁸(OR*)O_{2/2}
T = SiR⁸O_{3/2}; and
T*=Si (OR*)O_{3/2}
wherein each of R¹, R², R³, R⁴, R⁵, R⁶, R⁷ and R⁸ are independently an alkyl or fluoroalkyl containing moiety of from 1 to about 6 carbon atoms, preferably from 1 to 3 carbon atoms, an alkenyl moiety of from 2 to about 6 carbon atoms, preferably from 2 to about 4 carbon atoms, an aryl moiety of from 6 to about 12 carbon atoms, preferably from 6 to about 8 carbon atoms, a derivative of vinyl ester of Versatic acid, or -OR*, and wherein R* is H or an alkyl containing from 1 to about 6 carbon atoms, preferably from 1 to about 3 carbon atoms, and the subscripts a, b, c and d are each independently zero or positive subject to the following limitations a+d=2, c+d+f≥1 and a+b+c+e+f+d≥3. Preferably the subscripts are such that 3≤a+b+c+e+f+d≤1000, more preferably, 3≤a+b+c+ e+f+d≤500, and most preferably 4≤a+b+c+d +e+f≤200. In certain embodiments, R¹, R², R³, R⁴, R⁵, R⁶, R⁷ and R⁸ comprise groups having less than six carbon atoms to facilitate rapid hydrolysis, which reaction is driven by the volatility of the alcohol analog product of the hydrolysis.

In some specific embodiments of formula (I) the hydrolyzable or hydrolyzed polysiloxane (b)(i) can be such that the subscripts a and b are zero and the subscripts c, e, f and d are each positive with c +f ≥1 and d being 2. Alternatively, the subscripts a, c and d are positive, b is zero, c +f≥1, and a and d are each 1. Further, the subscripts can be such that a=2, b=e=0 and c+f≥1. Still further, the subscripts a, c and f are each zero and b + e≥1 and d=2. Even further, the subscripts can be such that a=0 b≥1 , c≥1, d=2 and e=f=0.

In another embodiment, the hydrolyzable or hydrolyzed polysiloxane (b)(i) is of the general formula (II): 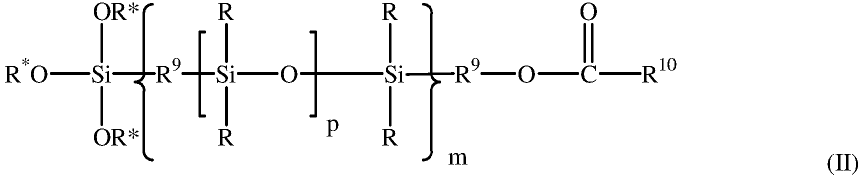 wherein each R* is independently H or alkyl of from 1 to about 6 carbon atoms, preferably from 1 to 3, each R is independently a monovalent alkyl of from 1 to 6 carbon atoms, preferably 1 to 3, each R⁹ is independently a divalent alkyl of from 1 to 6 carbon atoms, preferably 1 to 3, and R¹⁰ is a monovalent alkyl of about 9 carbon atoms, and the subscript p is from 1 to about 75 and m =1 to 10, preferred m=1 to 5 and most preferred m=1. In a more specific embodiment, p is from 1 to about 6, preferably 2 or 5. In yet another embodiment, p can be from 55 to about 70, preferably from 60 to 65, and most preferably about 61.

The hydrolyzable or hydrolyzed polysiloxane(s) (b)(i), based on formula (I) which are suitable for use in the present invention can be commercially available and include, for example, methoxy-functional silicones, such as DC-3074 and DC-3037 commercially available from Dow Corning; and GE SR191, SY-550, and SY-231 commercially available from Wacker Silicones located in Adrian, Michigan; and silanol-functional silicones, such as Dow Corning's DC-840, Z6018, Q1-2530 and 6-2230.

In certain embodiments, the previously described hydrolyzable or hydrolyzed polysiloxane (b)(i), selected from the group of compounds of formula I or II, is present in the coating compositions of the present invention in an amount ranging from about 0.01 to about 30 percent by weight, such as about 0.02 to about 20 percent by weight, or, in some cases, about 0.05 to about 15 percent by weight, with the weight percents being based on the total weight of the coating/paint composition.

### Epoxy Functional Polysiloxane (b)(ii)

As previously indicated, the coating compositions of the present invention also comprises an epoxy-functional silicone (b)(ii),. As used herein, the term "epoxy-functional silicone" refers to silicones/polysiloxanes comprising epoxy functional groups.

In certain embodiments, the coating compositions of the present invention comprise an epoxy-functional silicone comprising a plurality of epoxy functional groups, i.e., two or more epoxy functional groups. In certain embodiments of the present invention, the coating composition comprises an epoxy-functional silicone comprising two epoxy functional groups.

In certain embodiments, the coating compositions of the present invention can comprise an epoxy-functional silicone (b)(ii) represented by one of the following general structure:

MₐD^{E}_{b}D_{c}T^{E}ₑT_{f}M^{E}_{d} (III)

wherein:
M = SiR^{1b}R^{2b}R^{3b}O_{1/2};
M^{E} = SiR^{4b}R^{5b}R^{E}O_{1/2};
D = SiR^{6b}R^{7b}O_{2/2}; and,
D^{E}=SiR^{8b}R^{E}O_{2/2}
T = SiR^{8b}O_{3/2}; and,
T^{E}=SIR^{E}O_{3/2}
wherein each of R^{1b}, R^{2b}, R^{3b}, R⁴⁶, R⁵⁶, R^{6b}, R^{7b} and R^{8b} are independently an alkyl or fluoroalkyl containing moiety of from 1 to about 6 carbon atoms, optionally substituted by Si atoms and O atoms, preferably 1 to 3 carbon atoms, an alkenyl moiety of from 2 to about 6 carbon atoms, optionally substituted by Si atoms and O atoms, preferably 2 to 4 carbon atoms, an aryl moiety of from 6 to about 12 carbon atoms, optionally substituted by Si atoms and O atoms, preferably 6 to 8 carbon atoms, a derivative of the vinyl ester of Versatic acid, or R^{E}, and wherein R^{E} is an alkyl group substituted by an epoxy moiety, and the subscripts a, b, c, d, e and f are each independently zero or positive subject to the following limitations a+d=2, b+d+e≥1 and a+b+c+d+e+f≥3. Preferably the subscripts are such that 3≤a+b+c+d +e+f≤1000, more preferably, 3≤a+b+c+d +e+f ≤500, and most preferably 4≤a+b+c+d +e+f ≤200.

In some specific embodiments of epoxy-functional polysiloxane (b)(ii) can be such that the subscripts a, c, e and f are each zero, b≥1 and d=2. Alternatively, the subscripts a and d are each 1, c=e=f=0 and b≥1. Further, the subscript a=2, b≥1 and c and d are each zero. Further still, the subscripts a and b can each be zero, c≥1 and d=2.

In another embodiment herein, the (b)(ii) epoxy siloxane of the general formula (III) is of the formula: MD^{E}_{b}D_{c}M wherein the subscript b is from 2 to about 6, and the subscript c is from about 3 to about 150, preferably about 5 to about 100 and more preferably about 7 to about 80 and R^{E} is an alkyl group containing an epoxy moiety.

In certain embodiments, the previously described epoxy-functional silicone is present in the coating compositions of the present invention in an amount ranging from about 0.01 to about 30 percent by weight, such as about 0.02 to about 20 percent by weight, or, in some cases, about 0.025 to about 15 percent by weight, with the weight percent being based on the total weight of the coating/paint composition. The total amount of components b(i) and b(ii) should be a maximum of about 40 weight percent of the total weight of the composition.

In certain embodiments, the weight ratio of the component (b)(i) to the epoxy-functional silicone (b)(ii) is about 1:1, in some cases from about 0.5:1 to about 1:0.5, in yet other cases, from about 0.1:1 to about 1:0.1.

### Auxiliary Components

The coating composition described herein can further comprise at least one auxiliary component selected from the group consisting of filler or pigment, water, solvent. Besides the three main categories of ingredients, paint can have a wide variety of miscellaneous additives, which are usually added in small but effective amounts as would be known to those of ordinary skill in the art based on the desired effect to be achieved, yet provide a significant effect on the product. Some examples include additives like surfactants to modify surface tension, dispersants, defoamers to control foaming, coalescents, opaque polymers, colorants, anti-static agents, flow improvers, an agent to improve the finished appearance, an agent to increase wet edge, pigment stability improver, an agent to impart antifreeze properties, an agent to control skinning, catalysts, thickeners, stabilizers, emulsifiers, texturizers, adhesion promoters, UV stabilizers, flatteners (de-glossing agents), biocides to fight bacterial growth, silicone-based adhesion promoters, and the like and combinations thereof.

In one embodiment, the fillers, which are granular solids, are incorporated to impart toughness, texture, give the paint special properties and/or to reduce the cost of the paint, can be selected from the group consisting of titanium dioxide, clays, nano-clay, organo-clay, ground calcium carbonate, precipitated calcium carbonate, colloidal calcium carbonate, calcium carbonate treated with compounds containing a stearate moiety or stearic acid, fumed silica, precipitated silica, crushed quartz, ground quartz, finely ground quartz, alumina, aluminum hydroxide, ceramic and glass spheres, titanium hydroxide, kaolin, bentonite, montmorillonite, diatomaceous earth, iron oxide, carbon black, graphite, talc, mica, pumice, wollastonite, dolomite, feldspar, colored pigment, and combinations thereof.

The water in the coating compositions of the present invention can be provided for example, from a reaction between ingredients, atmospheric humidity, and water present in one or more of the ingredients. Water may be added during the formation of the composition to accelerate cure depending on the particular cure conditions, e.g., such as the use of the composition in arid environments where cure takes place at ambient temperature conditions.

In another embodiment, the solvent can be selected from the group consisting of alcohols, glycols, ketones, esters, ethers, carbonates, aliphatics, cycloaliphatics, aromatics, hetero aromatics, hetero aliphatics, hetero cycloaliphatics, amides, sulfoxides, water. More specifically the solvent can be mineral spirit, acetone, turpentine, naphtha, toluene, methyl ethyl ketone, dimethylformamide, 2-butoxyethanol, glycol ether, ethylbenzene, xylene, n-Butyl acetate, butanol, pyridine, dimethyl carbonate, dimethylsulfoxide, and combinations thereof.

In one embodiment herein, the coating composition comprises an additive such as an organic surfactant to modify the surface tension of the paint/coating, for example, a surfactant used in a dispersion comprising the coating composition described herein. Surfactants are also used to stabilize the dispersion of polymer particles during emulsion polymerization in paints and other applications. The mechanical stability, freeze-thaw stability and shelf-life of paints are all improved by the addition of surfactants. The addition of surfactants to paint also allows the paint to coat a surface more easily because surfactants increase the wetting of a solution. The surfactant can be any one or more of an anionic, cationic, non-ionic, or amphoteric surfactant. In one specific embodiment, the surfactant is a nonionic surfactant. In the context of the present invention, anionic surfactants may optionally be used. By way of example, mention may be made of surfactants such as the alkali metal salts of sulfonic or alkylsulfuric aromatic hydrocarbon-based acids and the preferred nonionic surfactants are polyoxyethylenated alkylphenols or polyoxyethylenated fatty alcohols. The amount of surfactant that can be used is that commonly employed for emulsification. The nonionic (preferably), ionic or amphoteric surfactants may be employed alone or mixed together. In practice, the dispersion according to the invention comprises from about 30 to about 90%, preferably from about 30 to about 60% by weight of water per about 70 to about 10%, preferably about 70 to about 40%, by weight of nonaqueous phase.

The dispersant employed herein can be for example, chosen from phosphates and/or polyacrylics.

The coalescent that may be employed herein can be chosen, preferably, from glycols and/or aliphatic petroleum cuts.

The thickener herein may be chosen, preferably, from acrylic cellulose thickeners, polyurethanes, natural gums and mixtures thereof.

In certain embodiments, the coating compositions of the present invention may comprise a colorant. As used herein, the term "colorant" means any substance that imparts color and/or other opacity and/or other visual effect to the composition. The colorant can be added to the coating in any suitable form, such as discrete particles, dispersions, solutions and/or flakes. A single colorant or a mixture of two or more colorants can be used in the coating compositions of the present invention.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant can be organic or inorganic and can be agglomerated or non-agglomerated. Colorants can be incorporated into the coating compositions by use of a grind vehicle, such as an acrylic grind vehicle, the use of which will be familiar to one skilled in the art.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), titanium dioxide, carbon black and mixtures thereof. The terms "pigment" and "colored filler" can be used interchangeably.

Example dyes include, but are not limited to, those that are solvent and/or aqueous based such as phthalo green or blue, iron oxide, bismuth vanadate, anthraquinone, perylene, aluminum and quinacridone.

Example tints include, but are not limited to, pigments dispersed in water-based or water miscible carriers such as AQUA-CHEM 896 commercially available from Degussa, Inc., CHARISMA COLORANTS and MAXITONER INDUSTRIAL COLORANTS commercially available from Accurate Dispersions division of Eastman Chemical, Inc.

As noted above, the colorant can be in the form of a dispersion including, but not limited to, a nanoparticle dispersion. Nanoparticle dispersions can include one or more highly dispersed nanoparticle colorants and/or colorant particles that produce a desired visible color and/or opacity and/or visual effect.

### Making Coating Composition and Uses thereof

The coating composition herein can be made by a process of combining the components (a), (b)(i) and (b)(ii) in any order or simultaneously in a manner which is conventionally understood. The coating composition herein can be in used in any paint, varnish, laquer, shellac or stain. Preferably, the coating composition is used in a paint, preferably an organic paint.

In one embodiment herein, the coating composition has properties which are synergistic as compared to a composition wherein only one of (b)(i) or (b)(ii) are employed in combination with an organic binder (a). In a more specific embodiment, the coating composition herein has a surface contact angle of water of from about 40 to about 80, alternatively from about 80 to about 120 or alternatively from about 120 to about 180. In embodiment, the coating compositions of the present invention may provide one or more of the following improvements and/or benefits: improved resistance to water, chemicals, UV, cracking, temperature, microbes, etc., improved hydrophobicity, low surface energy, durability, stain resistance and improved cleanability, as well as anti-graffiti properties.

The present invention also relates to a paint composition particularly concerned with a paint composition which is resistant against graffiti. This composition is non sacrificial.

In one embodiment, any of the aforementioned coating compositions can be applied to a substrate, including such nonlimiting examples as metals (including bare or precoated metal), plastics, wood, concrete, glass, paper, cement, clay, rocks, stones, fabric, ceramic, synthetic foam, gypsum, plaster of Paris, putty, stucco, or composites. In some aspects an additional primer can be coated onto the substrate before applying the coating.

In one embodiment the coating on the substrate can have a thickness of about 1-1000 µm. The final coating composition, whether freshly prepared or after storage, may be applied, for example, to facades, by various techniques, such as immersion techniques, including dip drain and dip spin procedures, by curtain coating, brush coating or roller coating and included combinations of the foregoing. It is also contemplated to use spray technique as well as combinations, e.g., spray and spin and spray and brush techniques. Coated articles that are at an elevated temperature may be coated, with the coating composition described herein. Possible treatments may include primers, pre-coats, and/or overcoats.
Primer is a preparatory coating put on materials before applying the paint itself. The primed surface ensures better adhesion of the paint, thereby increasing the durability of the paint and providing improved protection for the painted surface. Suitable primers also may block and seal stains, or hide a color that is to be painted over.

Before coating a substrate, it may be necessary or desirable to apply a pre-coat to prepare the surface and help the paint adhere correctly. One example of a solution is to simply apply a coat of flat latex paint and let it completely dry before adding the paint they plan to use for their final finish. For an even finish, one can select a primer and sealer for the pre-coat for example if desired to hide any color on the substrate and/or to produce a homogeneous finish for the final coat of paint.

Top coating is a transparent or translucent coat of paint applied over the underlying material as a sealer. In a paint system, the topcoat provides a resinous seal over the intermediate coats and the primer. The first topcoat may in fact penetrate into the intermediate coat, thus providing the coating system with an impervious top surface. The topcoat is the first line of defense of many coatings against aggressive agents. Top coating is used to provide: resistant seals for coating systems, initial barriers to the environment, resistance to chemicals, water and weather, toughness and wear resistance to the surface and a pleasant appearance. Preferably any architectural and/or industrial surface application can be coated with the coating composition described herein.

### EXAMPLES

Two sets of experiments were conducted by incorporating various additives in two different kinds of paints i.e. an acrylic latex paint (water-borne paint) and a silicone epoxy system/amine coating (solvent based paint).
The different additives are as follows: Hydrolyzed component b(i)1
A silanol terminated PDMS (HO(Me₂)Si-[OSi(Me)₂]x-OSi(Me₂)OH) having a viscosity of approximately 600 cst at 25°C. measured with a rotary viscosimeter at a shear rate of 10 s⁻¹ was used.

### Hydrolyzable component b(i) 2a, b, c

VeoVa^{™} 10 (vinyl ester of neodecanoic acid, available from Hexion Inc.) -based hydrolyzable PDMS were used in this study with general formula:

### EXAMPLES

Two sets of experiments were conducted by incorporating various additives in two different kinds of paints i.e. an acrylic latex paint (water-borne paint) and a silicone epoxy system/amine coating (solvent based paint).
The different additives are as follows: Hydrolyzed component b(i)1
A silanol terminated PDMS (HO(Me₂)Si-[OSi(Me)₂]x-OSi(Me₂)OH) having a viscosity of approximately 600 cst at 25°C. measured with a rotary viscosimeter at a shear rate of 10 s⁻¹ was used.

### Hydrolyzable component b(i) 2a, b, c

VeoVa^{™} 10 (vinyl ester of neodecanoic acid, available from Hexion Inc.) -based hydrolyzable PDMS were used in this study with general formula:

Z¹-(-L[SiR₂0]ₚ-SIR₂)ₘ-L-Z ²

Wherein L = -CH₂-CH₂-, and R = methyl
Z¹ = trimethoxysilyl or -Si(OCH₃)₃
and Z²=OC(O)-C(CH₃)(R¹)(R²),wherein R¹ and R² are alkyl groups R¹+R² = 6-7-C atoms.

Specific VEOVA^{™} 10-based hydrolyzable PDMS molecules using the above formula are defined as follows:
b(i)2a:p= 11-14; m=1 in the general formula above
b(i)2b: p= 1; m=1 in the general formula above
b(i)2c: p=61, m=1 in the general formula above
M = SiR¹R²R³O_{1/2};
M* = SiR⁴R⁵(OR*)O_{1/2};
D = SiR⁶R⁷O_{2/2};

### Component b(ii)1

An epoxide-functional polydimethylsiloxane copolymer, namely SilForce UV9300 polymer (with D/D^{E} of approximately 7) available from Momentive Performance Materials, was used as component b(ii)1.

Contact angle measurement was carried out using a sessile drop goniometer and a Krüss DSA 100 drop shape analyzer, respectively.

For contact angle measurements performed on the Krüss DSA 100 drop shape Analyzer, a pendant droplet is located at the tip of a cannula and placed onto the test surface. A camera records an image of the droplet. The contour of the droplet is analyzed by the drop shape analysis software allowing to fit a geometrical model to the contour. The contact angle is calculated from the angle of the fitted drop shape contour and the sample surface.

Stain washability studies were done based on the ASTM D4828 method. White paint films were applied on Laneta scrub test panels and dried for 7-days. Common household stains like crayon (purple), marker (blue) and tea solution were applied over films. Pen and crayon were separately applied using multiple strokes with uniform pressure as approximately 1 inch bands on paint films until degree of staining was saturated. Tea solution was applied using dropper as 0.5 - 1-inch bands and allowed to absorb. After 30 min, excess tea-solution was drained and stains were cleaned with a soft sponge dipped in a solution of commercial detergent powder in water using a wet abrasion and washability tester available from BYK. Samples were removed after 200 cycles of mechanical washing, placed in running water to remove excess soap, and dried under room temperature. After dying, an L* value (CIELAB color space) on the stained spots was analyzed (to determine cleanability as set out in Table 1 below) using a GretagMacbeth Color Eye Spectrophotometer. Higher L* value indicated higher whiteness and better cleaning.

Anti-graffiti performance: it corresponds to the ease of removing graffiti by hand with a wooden spatula without damaging the substrate. Two ratings were given. Rating 1 (high) corresponds to the high easiness of removing the graffiti (very low force from the hand needed) and rating 2 (low) means that it was difficult and/or not possible to remove the graffiti (high force needed from the hand).

Pressure Sensitive Adhesive (PSA) release force was assessed by determining the force required for removing the PSA by hand.

Comparative Example 1: Commercial acrylic paint ("Nerolac Excel Total", from Kansai Nerolac Paint Ltd) was obtained from a local hardware store. "Nerolac Excel Total" is an all in one acrylic exterior emulsion paints is a high performance, premium water based & long lasting exterior paint colors.

Comparative Example 1b: 0.3 gm of Silanol-PDMS b(i)1 was added to 10 gm of the acrylic paint obtained in Comparative Example 1. The formulation was mixed in a flacktec mixer for 1 min, and equilibrated overnight before applying the films.

Example 2: 0.225 gm of Silanol-PDMS b(i)1 and 0.075 gm of epoxy-PDMS b(ii)1 (ratio b(i)1 / b(ii)1 = 3) were added
to 10 gm of the acrylic paint obtained in Comparative Example 1. The formulation was mixed in a flacktec mixer for 1 min, and equilibrated overnight before applying the films.

Example 3: 0.15 gm of Silanol-PDMS b(i)1 and 0.15 gm of epoxy-PDMS b(ii)1 (ratio b(i)1 / b(ii)1 = 1) were added to
10 gm of the acrylic paint obtained in Comparative Example 1. The formulation was mixed in a flacktec mixer for 1 min, and equilibrated overnight before applying the films.

Example 4: 0.075 gm of Silanol-PDMS b(i)1 and 0.225 gm of epoxy-PDMS b(ii)1 (ratio b(i)1 / b(ii)1 = 1/3) were added
to 10 gm of the acrylic paint obtained in Comparative Example 1. The formulation was mixed in a flacktec mixer for 1 min, and equilibrated overnight before applying the films.

Comparative Example 2: 0.3 gm of epoxy-PDMS b(ii)1 was added to 10 gm of the acrylic paint obtained in Comparative Example 1. The formulation was mixed in a flacktec mixer for 1 min, and equilibrated overnight before applying the films (see above).

**TABLE 1**

| Formulation | Composition or weight ratio b(i)1/ b(ii) 1 | Water Contact Angle (Degrees) | Cleanability (L*) | | |
|---|---|---|---|---|---|
| | | | Crayon | Marker | Tea |
| Comparative Ex. 1 | No component b(i)1 and b(ii) 1 | 58 | 78.6 | 57.4 | 92.2 |
| Comparative Example 1b | component b(i)1 | 72 | 86.1 | 59.7 | 91.7 |
| Example 2 | b(i)1/b(ii)1 = 3 | 91 | 92.4 | 57.2 | 93.0 |
| Example 3 | b(i)1/b(ii)1 = 1 | 94 | 92.4 | 64.0 | 93.1 |
| Example 4 | b(i)1/b(ii)1 = 1/3 | 90 | 91.3 | 59.2 | 92.2 |
| Comparative Example 2 | component b(ii)1 | 81 | 86.7 | 60.4 | 91.3 |

For acrylic paints, blends of Epoxy-PDMS b(ii) 1 and Silanol-PDMS b(i)1 showed
significantly higher water contact angle and washability than when they were used separately at the same total use level. Epoxy-PDMS and Silanol-PDMS as sole siloxane based components (b) in the composition (see comparative example 2 and comparative example 1b, respectively) resulted in a 23 degree and a 14-degree higher contact angle than comparative example 1, respectively. However, all blends of Epoxy-PDMS and Silanol-PDMS showed 32 to 36 degrees higher contact angles than comparative example 1 even at the same total use level (3 weight per cent) as sole siloxane based components (b).

Comparative Example 3: Silicone Epoxy system /amine coating formulation. A silicone-epoxy system/amine coating was used. 5 g of Silicone Epoxy system resin binder (a), 1 g of amine hardener (3-aminopropyltriethoxysilane) were mixed by hand and coated with a thickness of around 100 microns onto a metal plate. Tesa^{®} tape 4154 and 7475 (available from Tesa) as well as commercial acrylic spray paint were applied onto the above cured coating to simulate the graffiti formation. The commercial acrylic resin spray corresponds to "Sparvar Farbspray mit Rostschutz Rapsgelb, Signalschwarz Feuerrot" or spray paint with corrosion protection in yellow, black and red from SPARVAR.

Comparative Example 4: 4,6 g of silicone epoxy resin system binder (a), 1 g of amine hardener and 0.4 g silanol PDMS b(i)1 were mixed by hand and coated onto a metal plate. Tesa^{®} tape 4154 and 7475, as well as commercial spray paint were applied onto the coating.

Comparative Example 5: 4.6 g of Silicone epoxy system resin binder (a), 1 g of amine hardener (3-aminopropyltriethoxysilane) and 0.4 g epoxy PDMS (b)(ii)1 were mixed by hand and coated onto a metal plate. Tesa^{®} tape 4154 and 7475 as well as commercial spray paint were applied onto the coating.

Comparative Example 6: 4.6 g of silicone epoxy resin system binder (a), 1 g of amine hardener (3-aminopropyltriethoxysilane) 0.4 g of a VeoVa ^{™} 10 based hydrolyzable PDMS (b)(i)2a were mixed by hand and coated onto a metal plate. Tesa^{®} tape 4154 and 7475 as well as commercial spray paint were applied onto the coating.

Example 5: 4.6 g of silicone epoxy resin system binder (a), 1 g of amine hardener (3-aminopropyltriethoxysilane), 0.2 g epoxy PDMS (b)(ii)1 and 0.2 g silanol PDMS (b)(i)1 were mixed by hand and coated onto a metal plate. Tesa^{®} tape 4154 and 7475 as well as commercial spray paint were applied onto the coating.

Example 6: 4.6 g of silicone epoxy resin system binder (a), 1 g of amine hardener (3-aminopropyltriethoxysilane), 0.2 g of a VeoVa^{™} 10 based hydrolyzable PDMS (b)(i)2a and 0.2 g epoxy PDMS were mixed by hand and coated onto a metal plate with a thickness of 10 microns. Tesa^{®} tape 4154 and 7475 as well as commercial spray paint were applied onto the coating.

**TABLE 2**

| Formulation | | | Water Contact Angle (Degrees) | PSA Release Tesa^{®} tape 4154 performance 1= high, 2= low | PSA Release Tesa^{®} tape 7475 performance 1= high, 2= low |
|---|---|---|---|---|---|
| Comparative Example 3 | No siloxane based component (b) | | 80.1 | 2 | 2 |
| Comparative Example 4 | (b)(i)1 | Silanol terminated PDMS | 105.4 | 1 | 1 |
| Comparative Example 5 | (b)(ii)1 | Epoxy PDMS | 96.8 | 1 | 1 |
| Comparative Example 6 | (b)(i)2a | VEOVA^{™} 10 based PDMS | 97.3 | 1 | 1 |
| Example 5 | (b)(ii)1/(b)(i)1 =1 | Epoxy PDMS and Silanol terminated PDMS weight ratio 1:1 | 114.0 | 1 | 1 |
| Example 6 | (b)(ii)1/(b)(i)2a =1 | Epoxy PDMS and VEOVA^{™} 10 based PDMS weight ratio 1:1 | 101.3 | 1 | 1 |

In the Silicone Epoxy system /amine coating formulation, the addition of 8 weight % of Epoxy-PDMS (b)(ii)1, hydrolyzable PDMS (b)(i)2a or silanol PDMS (b)(i)1 as sole siloxane based components (b) revealed a 16.7, 17.2 and 25.3, respectively, degrees higher contact angle than comparative example 3. The combination of 4 weight % epoxy-PDMS (b)(ii)1 and 4 weight % hydrolyzable PDMS (b)(i)2a revealed a water contact angle 21.2 % higher than comparative example 3. The combination of 4 weight % epoxy-PDMS (b)(ii)1 and 4 weight % silanol PDMS (b)(i)1 revealed a water contact angle 33.9 degrees higher than comparative example 3. All of the samples prepared showed tape release performance as indicated by the ease of tape removal from the coating. Whereas graffiti paint could not be removed from coating of comparative example 2. Without wishing to be bound to theory, it appears that the synergistic hydrophobic effect from the blend of the 2 kinds of polysiloxanes based component b(i) and (b) (ii) brings superior effect to the coating as this hydrophobicity will last over time without leaching of the silicone based components as they will react with the coating matrix due to their hydrolyzed or hydrolyzable groups. This hydrophobicity increase in the presence of the blend of silicones components b(i) and b(ii) seems to be linked to superior anti-graffiti properties versus the reference silicone epoxy system as indicated by the ease of mechanical graffiti paint removal from the coating.

While the invention has been described with reference to certain embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention but that the invention will include all embodiments falling within the scope of the appended claims.

## Claims

1. A coating composition comprising:
(a) an organic binder; and,
(b) a combination of
(i) hydrolyzable or hydrolyzed polysiloxane, and
(ii) epoxy-functional polysiloxane and
optionally a hardener,
wherein the organic binder (a) is selected from the
group consisting of acrylic resins, vinyl-acrylic resins, vinyl acetate/ethylene (VAE), alkyd resins, epoxy resins, latex, asphaltic, polyester, melamine-formaldehyde, phenol formaldehyde, polyamide, isocyanate, alkyds, melamine resins, and combinations thereof,
and
wherein the (b)(i) hydrolyzable or hydrolyzed polysiloxane contains at least one -Si(R)₃₋ₓ(OR*)ₓ functionality wherein each R is alkyl of from 1 to 6 carbon atoms, R* is independently H or alkyl of from 1 to about 6 carbon atoms, and x is an integer of from 1 to 3.

2. The coating composition of claim 1, wherein the organic binder (a) is an acrylic binder comprising one or more monomers selected from the group consisting of butylacrylate, methyl methacrylate, ethyl hexyl acrylate, styrene, vinyl toluene, acrylonitrile, vinyl acetate, acrylic acid, vinyl ester of Versatic acid, and silane containing monomer.

3. The coating composition of claim 1, wherein the organic binder (a) is an epoxy resin binder.

4. The coating composition of claim 1, wherein the (b)(i) hydrolyzable or hydrolyzed polysiloxane is a polydimethylsiloxane having a viscosity of from 1 cps to 10,000 cps at 25°C, when measured with a rotary viscosimeter at a shear rate of 10 s⁻¹.

5. The coating composition of claim 1, wherein the (b)(i) hydrolyzable or hydrolyzed polysiloxane is of the general formula (I):
MₐD_{b}D*_{c}TₑT*_{f}M*_{d} (I)
wherein:
M = SiR¹R²R³O_{1/2};
M* = SiR⁴R⁵(OR*)O_{1/2},
D = SiR⁶R⁷O_{2/2}; and,
D*=SiR⁸(OR*)O_{2/2};
T = SiR⁸O_{3/2}; and
T*=Si (OR*)O_{3/2}
wherein each of R¹, R², R³, R⁴, R⁵, R⁶, R⁷ and R⁸ are independently an alkyl or fluoroalkyl containing moiety of from 1 to about 6 carbon atoms, an alkenyl moiety of from 2 to about 6 carbon atoms, an aryl moiety of from 6 to about 12 carbon atoms, a derivative of vinyl ester of Versatic acid, or -OR*, and wherein R* is H or an alkyl containing from 1 to about 6 carbon atoms, and the subscripts a, b, c and d are each independently zero or positive subject to the following limitations a+d=2, c+d+f≥1 and a+b+c+d+e+f≥3, preferably
each of R¹, R², R³, R⁴, R⁵, R⁶, R⁷ and R⁸ are independently an alkyl of from 1 to about 3 carbon atoms or -OR* and the subscripts 3≤a+b+c+d+e+f≤1,000.

6. The coating composition of claim 1, wherein the (b)(i) hydrolyzable or hydrolyzed polysiloxane is of the general formula (II): 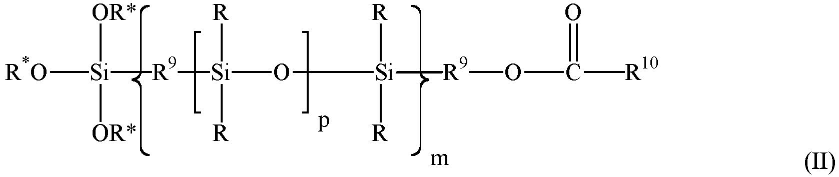 wherein each R* is independently H or alkyl of from 1 to about 6 carbon atoms, each R is independently a monovalent alkyl of from 1 to 6 carbon atoms, each R⁹ is independently a divalent alkyl of from 1 to 6 carbon atoms, and R¹⁰ is a monovalent alkyl of about 9 carbon atoms, the subscript p is from about 1 to about 75, and m is 1, wherein preferably the subscript p is from 1 to about 6,
or wherein preferably the subscript p is from 55 to about 70.

7. The coating composition of claim 1, wherein the (b)(ii) epoxy-functional siloxane is of the general formula (III):
MₐD^{E}_{b}D_{c}T^{E}ₑT_{f}M^{E}_{d} (III)
wherein:
M = SiR^{1b}R^{2b}R^{3b}O_{1/2};
M^{E} = SiR^{4b}R^{5b}R^{E}O_{1/2};
D = SiR^{6b}R^{7b}O_{2/2}; and,
D^{E}=SiR^{8b}R^{E}O_{2/2}
T = SiR^{8b}O_{3/2}; and,
T^{E}=SiR^{E}O_{3/2}
wherein each of R^{1b}, R^{2b}, R^{3b}, R^{4b}, R^{5b}, R^{6b}, R^{7b} and R^{8b} are independently an alkyl or fluoroalkyl containing moiety of from 1 to about 6 carbon atoms, optionally substituted by Si atoms and O atoms, an alkenyl moiety of from 2 to about 6 carbon atoms, optionally substituted by Si atoms and O atoms, an aryl moiety of from 6 to about 12 carbon atoms, optionally substituted by Si atoms and O atoms, a vinyl ester of Versatic acid moiety, or R^{E}, wherein R^{E} is an alkyl group containing an epoxy moiety, and the subscripts a, b, c and d are each independently zero or positive subject to the following limitations a+d=2, b+d+e≥1 and a+b+c+d+e+f≥3
wherein preferably each of R¹, R², R³, R⁴, R⁵, R⁶, R⁷ and R⁸ are independently an alkyl of from 1 to about 3 carbon atoms or R^{E}, wherein R^{E} is an alkyl group containing an epoxy moiety, and the subscripts 3≤a+b+c+d+e+f≤1,000.

8. The coating composition of claim 7, wherein the (b)(ii) epoxy
siloxane of general formula (III) is of the formula MD^{E}_{b}D_{c}M^{E} wherein the subscript b is from 2 to about 6 and the subscript c is from 3 to about 150 and R^{E} is an alkyl group containing an epoxy moiety.

9. The coating composition of claim 1, further comprising at least one auxiliary component selected from the group consisting of filler, water, solvent, surfactant, dispersant, defoamer, coalescent, thickener, opaque polymer, biocide, colorant, anti-static agent, silicone-based additive and combinations thereof,
wherein preferably the filler is selected from the group consisting of titanium dioxide, clays, nano-clay, organo-clay, ground calcium carbonate, precipitated calcium carbonate, colloidal calcium carbonate, calcium carbonate treated with compounds containing a stearate moiety or stearic acid, fumed silica, precipitated silica, crushed quartz, ground quartz, alumina, aluminum hydroxide, ceramic and glass spheres, titanium hydroxide, kaolin, bentonite montmorillonite, diatomaceous earth, iron oxide, carbon black, graphite, talc, mica, pumice, wollastonite, dolomite, feldspar, colored pigment, and combinations thereof,
and/or
wherein preferably the solvent is selected from the group consisting of mineral spirits, acetone, turpentine, naphtha, toluene, methyl ethyl ketone, dimethylformamide, 2-butoxyethanol, glycol ether, ethylbenzene, xylene, n-butyl acetate, butanol, and combinations thereof.

10. A paint comprising the coating composition of claim 1.

11. A coated article comprising the paint of claim 10 coated onto a substrate, wherein the substrate comprises metal, plastic, wood, concrete, glass, paper, brick, cement, clay, rocks, stones, fabric, ceramic, synthetic foam, gypsum, plaster of Paris, putty, stucco or composites.

12. A process of making a coating composition comprising combining
(a) an organic binder; and,
(b) a combination of
(i) hydrolyzable or hydrolyzed polysiloxane, and
(ii) epoxy-functional polysiloxane,
wherein the organic binder (a) is selected from the group consisting of acrylic resins, vinyl-acrylic resins, vinyl acetate/ethylene (VAE), alkyd resins, epoxy resins, latex, asphaltic, polyester, melamine-formaldehyde, phenol formaldehyde, polyamide, isocyanate, alkyds, melamine resins, and combinations thereof, and
wherein the (b)(i) hydrolyzable or hydrolyzed polysiloxane contains at least one -Si(R)₃₋ₓ(OR*)ₓ functionality wherein each R is alkyl of from 1 to 6 carbon atoms, R* is independently H or alkyl of from 1 to about 6 carbon atoms, and x is an integer of from 1 to 3.

13. A coating composition made by the process of claim 12.

14. A paint comprising the coating composition of claim 13.

15. A coated article [or substrate] comprising the paint of claim 14 coated onto a substrate, wherein the substrate comprises metal, plastic, wood, concrete, glass, paper or brick.

## Patentansprüche

1. Eine Beschichtungszusammensetzung, die umfasst:
(a) ein organisches Bindemittel; und,
(b) eine Kombination aus
(i) hydrolysierbarem oder hydrolysiertem Polysiloxan, und
(ii) epoxyfunktionellem Polysiloxan, und
wahlweise einem Härtungsmittel,
wobei das organische Bindemittel (a) aus der Gruppe ausgewählt ist, die aus Acrylharzen, Vinyl-Acryl-Harzen, Vinylacetat/Ethylen (VAE), Alkydharzen, Epoxidharzen, Latex, Asphaltbindemittel, Polyester, Melamin-Formaldehyd, Phenol-Formaldehyd, Polyamid, Isocyanat, Alkyden, Melaminharzen und Kombinationen davon besteht,
und
wobei das (b)(i) hydrolysierbare oder hydrolysierte Polysiloxan mindestens eine Funktionalität -Si(R)₃₋ₓ(OR*)ₓ enthält, worin jedes R eine Alkylgruppe mit 1 bis 6 Kohlenstoffatomen ist, R* in unabhängiger Weise H oder eine Alkylgruppe mit 1 bis etwa 6 Kohlenstoffatomen ist und x eine ganze Zahl von 1 bis 3 ist.

2. Die Beschichtungszusammensetzung gemäß Anspruch 1, wobei das organische Bindemittel (a) ein Acrylbindemittel ist, das ein oder mehrere Monomere umfasst, die aus der Gruppe ausgewählt sind, die aus Butylacrylat, Methylmethacrylat, Ethylhexylacrylat, Styrol, Vinyltoluol, Acrylnitril, Vinylacetat, Acrylsäure, Vinylester von Versaticsäure und silanhaltigem Monomer besteht.

3. Die Beschichtungszusammensetzung gemäß Anspruch 1, wobei das organische Bindemittel (a) ein Epoxidharz-Bindemittel ist.

4. Die Beschichtungszusammensetzung gemäß Anspruch 1, wobei das (b)(i) hydrolysierbare oder hydrolysierte Polysiloxan ein Polydimethylsiloxan mit einer Viskosität von 1 cps bis 10.000 cps bei 25°C ist, gemessen mit einem Rotationsviskosimeter bei einer Scherrate von 10 s⁻¹.

5. Die Beschichtungszusammensetzung gemäß Anspruch 1, wobei das (b)(i) hydrolysierbare oder hydrolysierte Polysiloxan die allgemeine Formel (I) aufweist:
MₐD_{b}D*_{c}TₑT*_{f}M*_{d} (I)
worin
M = SiR¹R²R³O_{1/2};
M^{*} = SiR⁴R⁵(OR^{*})O_{1/2};
D = SiR⁶R⁷O_{2/2}; und,
D*=SiR8(OR*)O_{2/2};
T = SiR⁸O_{3/2}; und
T*=Si (OR*)O_{3/2}
worin jeder der Reste R¹, R², R³, R⁴, R⁵, R⁶, R⁷ und R⁸ unabhängig voneinander eine Alkyl- oder Fluoralkyl-haltige Einheit mit 1 bis etwa 6 Kohlenstoffatomen, eine Alkenyl-Einheit mit 2 bis etwa 6 Kohlenstoffatomen, eine Aryl-Einheit mit 6 bis etwa 12 Kohlenstoffatomen, ein Derivat des Vinylesters von Versaticsäure oder -OR* ist, und worin R* H oder eine Alkylgruppe mit 1 bis etwa 6 Kohlenstoffatomen ist, und die Indizes a, b, c und d jeweils unabhängig voneinander Null oder positiv sind, vorbehaltlich der folgenden Einschränkungen a+d=2, c+d+f≥1 und a+b+c+d+e+f≥3, bevorzugt
ist jeder der Reste R¹, R², R³, R⁴, R⁵, R⁶, R⁷ und R⁸ jeweils unabhängig voneinander eine Alkylgruppe mit 1 bis etwa 3 Kohlenstoffatomen oder -OR*, und die Indizes sind 3≤a+b+c+d+e+f≤1.000.

6. Die Beschichtungszusammensetzung gemäß Anspruch 1, wobei das (b)(i) hydrolysierbare oder hydrolysierte Polysiloxan die allgemeine Formel (II) aufweist: 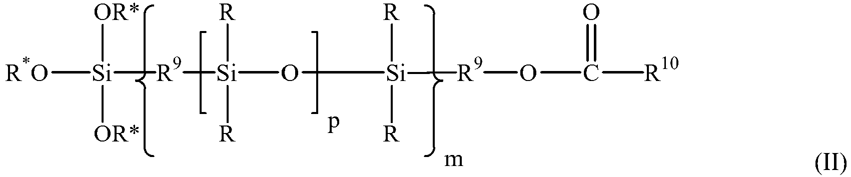 worin jedes R* in unabhängiger Weise H oder eine Alkylgruppe mit 1 bis etwa 6 Kohlenstoffatomen ist, jedes R in unabhängiger Weise eine einwertige Alkylgruppe mit 1 bis 6 Kohlenstoffatomen ist, jedes R⁹ in unabhängiger Weise eine zweiwertige Alkylgruppe mit 1 bis 6 Kohlenstoffatomen ist und R¹⁰ eine einwertige Alkylgruppe mit etwa 9 Kohlenstoffatomen ist, der Index p etwa 1 bis etwa 75 ist, und m 1 ist, wobei bevorzugt der Index p 1 bis etwa 6 ist,
oder worin bevorzugt der Index p von 55 bis etwa 70 ist.

7. Die Beschichtungszusammensetzung gemäß Anspruch 1, wobei das (b)(ii) epoxyfunktionelle Siloxan die allgemeine Formel (III) aufweist:
MₐD^{E}_{b}D_{c}T^{E}ₑT_{f}M^{E}_{d} (I)
worin
M = SiR^{1b}R^{2b}R^{3b}O_{1/2};
M^{E} = SiR^{4b}R^{5b}R^{E}O_{1/2;}
D = SiR^{6b}R^{7b}O_{2/2}; und,
D^{E}=SiR^{8b}R^{E}O_{2/2}
T = SiR^{8b}O_{3/2}; und,
T^{E}=SIR^{E}O_{3/2}
worin jeder der Reste R^{1b}, R^{2b}, R^{3b}, R^{4b}, R^{5b}, R^{6b}, R^{7b} und R^{8b} unabhängig voneinander eine Alkyl- oder Fluoralkyl-haltige Einheit mit 1 bis etwa 6 Kohlenstoffatomen, wahlweise durch Si- und O-Atome substituiert, eine Alkenyl-Einheit mit 2 bis etwa 6 Kohlenstoffatomen, wahlweise durch Si- und O-Atome substituiert, eine Aryleinheit mit 6 bis etwa 12 Kohlenstoffatomen, die wahlweise mit Si- und O-Atomen substituiert ist, ein Vinylester der Versaticsäure-Einheit, oder R^{E}, wobei R^{E} eine Alkylgruppe, die eine Epoxyeinheit enthält, ist, ist, und die Indizes a, b, c und d jeweils unabhängig voneinander Null oder positiv sind, mit den folgenden Einschränkungen a+d=2, b+d+e≥1 und a+b+c+d+e+f≥3
wobei bevorzugt jeder der Reste R¹, R², R³, R⁴, R⁵, R⁶, R⁷ und R⁸ unabhängig voneinander eine Alkylgruppe mit 1 bis etwa 3 Kohlenstoffatomen oder R^{E}, wobei R^{E} eine Alkylgruppe, die eine Epoxyeinheit enthält, ist, ist, und die Indizes sind 3≤a+b+c+d+e+f≤1.000.

8. Die Beschichtungszusammensetzung gemäß Anspruch 7, wobei das (b)(ii) Epoxysiloxan der allgemeinen Formel (III) die Formel MD^{E}_{b}D_{c}M^{E} aufweist, wobei der Index b von 2 bis etwa 6 und der Index c von 3 bis etwa 150 beträgt, und R^{E} eine Alkylgruppe ist, die eine Epoxyeinheit enthält.

9. Die Beschichtungszusammensetzung gemäß Anspruch 1, die ferner mindestens eine Hilfskomponente umfasst, die aus der Gruppe ausgewählt ist, die aus Füllstoff, Wasser, Lösungsmittel, Tensid, Dispergiermittel, Entschäumer, Koaleszenzmittel, Verdickungsmittel, opakem Polymer, Biozid, Farbstoff, Antistatikum, Additiv auf Silikonbasis und Kombinationen davon besteht,
wobei der Füllstoff bevorzugt aus der Gruppe ausgewählt ist, die aus Titandioxid, Tonen, Nanoton, Organoton, gemahlenem Calciumcarbonat, gefälltem Calciumcarbonat, kolloidalem Calciumcarbonat, Calciumcarbonat, das mit Verbindungen behandelt wurde, die eine Stearatgruppe oder Stearinsäure enthalten, pyrogener Kieselsäure, gefällter Kieselsäure, zerkleinertem Quarz, gemahlenem Quarz, Aluminiumoxid, Aluminiumhydroxid, Keramik- und Glaskügelchen, Titanhydroxid, Kaolin, Bentonit, Montmorillonit, Diatomeenerde, Eisenoxid, Ruß, Graphit, Talk, Glimmer, Bimsstein, Wollastonit, Dolomit, Feldspat, Farbpigmenten und Kombinationen davon besteht,
und/oder
wobei das Lösungsmittel bevorzugt aus der Gruppe ausgewählt ist, die aus Waschbenzin, Aceton, Terpentin, Naphtha, Toluol, Methylethylketon, Dimethylformamid, 2-Butoxyethanol, Glycolether, Ethylbenzol, Xylol, n-Butylacetat, Butanol und Kombinationen davon besteht.

10. Eine Farbe, die die Beschichtungszusammensetzung gemäß Anspruch 1 umfasst.

11. Ein beschichteter Gegenstand, der die Farbe gemäß Anspruch 10 umfasst, die auf ein Substrat aufgetragen ist, wobei das Substrat Metall, Kunststoff, Holz, Beton, Glas, Papier, Ziegel, Zement, Ton, Gestein, Steine, Gewebe, Keramik, Kunstschaum, Gips, Gipsguss, Spachtelmasse, Stuck oder Verbundwerkstoffe umfasst.

12. Ein Verfahren zur Herstellung einer Beschichtungszusammensetzung, umfassend das Zusammenbringen von
(a) einem organischen Bindemittel; und
(b) einer Kombination aus
(i) hydrolysierbarem oder hydrolysiertem Polysiloxan und
(ii) epoxyfunktionellem Polysiloxan,
wobei das organische Bindemittel (a) aus der Gruppe ausgewählt ist, die aus Acrylharzen, Vinyl-Acryl-Harzen, Vinylacetat/Ethylen (VAE), Alkydharzen, Epoxidharzen, Latex, Asphaltbindemittel, Polyester, Melamin-Formaldehyd, Phenol-Formaldehyd, Polyamid, Isocyanat, Alkyden, Melaminharzen und Kombinationen davon besteht, und
wobei das (b)(i) hydrolysierbare oder hydrolysierte Polysiloxan mindestens eine -Si(R)₃₋ₓ(OR*)ₓ-Funktionalität enthält, wobei jedes R eine Alkylgruppe mit 1 bis 6 Kohlenstoffatomen ist, R* in unabhängiger Weise H oder eine Alkylgruppe mit 1 bis etwa 6 Kohlenstoffatomen ist, und x eine ganze Zahl von 1 bis 3 ist.

13. Eine Beschichtungszusammensetzung, die gemäß dem Verfahren des Anspruchs 12 hergestellt wurde.

14. Eine Farbe, die die Beschichtungszusammensetzung gemäß Anspruch 13 umfasst.

15. Ein beschichteter Gegenstand [oder Substrat], der die Farbe gemäß Anspruch 14 umfasst, die auf ein Substrat aufgetragen ist, wobei das Substrat Metall, Kunststoff, Holz, Beton, Glas, Papier oder Ziegel umfasst.

## Revendications

1. Une composition de revêtement comprenant :
(a) un liant organique ; et,
(b) une combinaison de
(i) un polysiloxane hydrolysable ou hydrolysé, et
(ii) un polysiloxane à fonction époxy, et
optionnellement un durcisseur,
dans laquelle le liant organique (a) est choisi dans le groupe constitué par les résines acryliques, les résines vinyl-acryliques, l'acétate de vinyle/éthylène (VAE), les résines alkydes, les résines époxy, le latex, l'asphalte, le polyester, la mélamine-formaldéhyde, le phénol-formaldéhyde, le polyamide, l'isocyanate, les alkydes, les résines de mélamine et les combinaisons de ceux-ci,
et
dans laquelle le (b)(i) polysiloxane hydrolysable ou hydrolysé contient au moins une fonctionnalité -Si(R)₃₋ₓ(OR*)ₓdans laquelle chaque R est un alkyle de 1 à 6 atomes de carbone, R* est indépendamment H ou un alkyle de 1 à environ 6 atomes de carbone, et x est un nombre entier de 1 à 3.

2. La composition de revêtement de la revendication 1, dans laquelle le liant organique (a) est un liant acrylique comprenant un ou plusieurs monomères choisis dans le groupe constitué par le butylacrylate, le méthacrylate de méthyle, l'acrylate d'éthylhexyle, le styrène, le vinyltoluène, l'acrylonitrile, l'acétate de vinyle, l'acide acrylique, l'ester de vinyle de l'acide versatique, et le monomère contenant du silane.

3. La composition de revêtement de la revendication 1, dans laquelle le liant organique (a) est un liant de résine époxy.

4. La composition de revêtement de la revendication 1, dans laquelle le (b)(i) polysiloxane hydrolysable ou hydrolysé est un polydiméthylsiloxane ayant une viscosité de 1 cps à 10 000 cps à 25°C, mesurée avec un viscosimètre rotatif à un taux de cisaillement de 10 s⁻¹.

5. La composition de revêtement de la revendication 1, dans laquelle le (b)(i) polysiloxane hydrolysable ou hydrolysé a la formule générale (I) :
MₐD_{b}D*_{c}TₑT*_{f}M*_{d} (I)
dans laquelle :
M = SiR¹R²R³O_{1/2};
M* = SiR⁴R⁵(OR*)O_{1/2};
D = SiR⁶R⁷O_{2/2}; et,
D*=SiR⁸(OR*)O_{2/2};
T = SiR⁸O_{3/2}; et
T*=Si (OR*)O_{3/2}
où chacun des R¹, R², R³, R⁴, R⁵, R⁶, R⁷ et R⁸ est indépendamment un groupe alkyle ou fluoroalkyle contenant de 1 à environ 6 atomes de carbone, un groupe alcényle de 2 à environ 6 atomes de carbone, un groupe aryle de 6 à environ 12 atomes de carbone, un dérivé de l'ester vinylique de l'acide versatique, ou -OR*, et où R* est H ou un alkyle contenant de 1 à environ 6 atomes de carbone, et les indices a, b, c et d sont chacun indépendamment nuls ou positifs sous réserve des limitations suivantes a+d=2, c+d+f≥1 et a+b+c+d+e+f≥3, de préférence chacun des R¹, R², R³, R⁴, R⁵, R⁶, R⁷ et R⁸ est indépendamment un alkyle de 1 à environ 3 atomes de carbone ou -OR* et les indices sont 3≤a+b+c+d+e+f≤1,000.

6. La composition de revêtement de la revendication 1, dans laquelle le (b)(i) polysiloxane hydrolysable ou hydrolysé est de formule générale (II) : 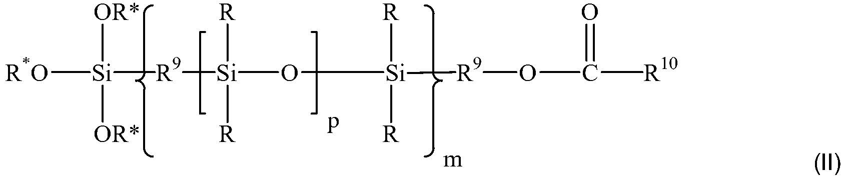 dans laquelle chaque R* est indépendamment H ou un alkyle de 1 à environ 6 atomes de carbone, chaque R est indépendamment un alkyle monovalent de 1 à 6 atomes de carbone, chaque R⁹ est indépendamment un alkyle divalent de 1 à 6 atomes de carbone, et R¹⁰ est un alkyle monovalent d'environ 9 atomes de carbone, l'indice p est d'environ 1 à environ 75, et m est 1, où de préférence l'indice p est de 1 à environ 6,
ou dans laquelle l'indice p est de préférence compris entre 55 et environ 70.

7. La composition de revêtement de la revendication 1, dans laquelle le siloxane à fonction époxy (b)(ii) est de formule générale (III) :
MₐD^{E}_{b}D_{c}T^{E}ₑT_{f}M^{E}_{d} (III)
dans laquelle :
M = SiR^{1b}R^{2b}R^{3b}O_{1/2};
M^{E} = SiR^{4b}R^{5b}R^{E}O_{1/2;}
D = SiR^{6b}R^{7b}O_{2/2}; et,
D^{E}=SiR^{8b}R^{E}O_{2/2}
T = SiR^{8b}O_{3/2}; et,
T^{E}=SiR^{EO}_{3/2}
où chacun des R^{1b}, R^{2b}, R^{3b}, R^{4b}, R^{5b}, R^{6b}, R^{7b} et R^{8b} est indépendamment un groupe alkyle ou fluoroalkyle contenant de 1 à environ 6 atomes de carbone, optionnellement substitué par des atomes de Si et des atomes d'O, un groupe alcényle de 2 à environ 6 atomes de carbone, optionnellement substitué par des atomes de Si et des atomes d'O, un groupe aryle de 6 à 12 atomes de carbone, optionnellement substitué par des atomes de Si et des atomes d'O, un ester vinylique d'un groupement d'acide versatique ou R^{E}, où R^{E} est un groupe alkyle contenant un groupement époxy, et les indices a, b, c et d sont chacun indépendamment nuls ou positifs sous réserve des limitations suivantes a+d=2, b+d+e≥1 et a+b+c+d+e+f≥3
où, de préférence, chacun des R¹, R², R³, R⁴, R⁵, R⁶, R⁷ et R⁸ est indépendamment un alkyle de 1 à environ 3 atomes de carbone ou R^{E}, où R^{E} est un groupe alkyle contenant un groupement époxy, et les indices sont 3≤a+b+c+d+e+f≤1,000.

8. La composition de revêtement de la revendication 7, dans laquelle le (b)(ii) siloxane époxy de formule générale (III) est de la formule MD^{E}_{b}D_{c}M^{E} dans laquelle l'indice b est compris entre 2 et environ 6 et l'indice c est compris entre 3 et environ 150 et R^{E} est un groupe alkyle contenant un groupe époxy.

9. La composition de revêtement de la revendication 1, comprenant en outre au moins un composant auxiliaire choisi dans le groupe constitué par la charge, l'eau, le solvant, le tensioactif, le dispersant, l'antimousse, le coalescent, l'épaississant, le polymère opaque, le biocide, le colorant, l'agent antistatique, l'additif à base de silicone et des combinaisons de ceux-ci,
où, de préférence, la charge est choisie dans le groupe constitué par le dioxyde de titane, les argiles, les nano-argiles, les organo-argiles, le carbonate de calcium broyé, le carbonate de calcium précipité, le carbonate de calcium colloïdal, le carbonate de calcium traité avec des composés contenant un groupement stéarate ou de l'acide stéarique, la silice pyrogénée, la silice précipitée, quartz broyé, quartz moulu, alumine, hydroxyde d'aluminium, sphères de céramique et de verre, hydroxyde de titane, kaolin, bentonite montmorillonite, terre diatomée, oxyde de fer, noir de carbone, graphite, talc, mica, pierre ponce, wollastonite, dolomite, feldspath, pigment coloré, et leurs combinaisons,
et/ou
où, de préférence, le solvant est choisi dans le groupe constitué par les essences minérales, l'acétone, la térébenthine, le naphta, le toluène, la méthyléthylcétone, le diméthylformamide, le 2-butoxyéthanol, l'éther de glycol, l'éthylbenzène, le xylène, l'acétate de n-butyle, le butanol, et des combinaisons de ceux-ci.

10. Une peinture comprenant la composition de revêtement de la revendication 1.

11. Un article revêtu comprenant la peinture de la revendication 10 appliquée sur un substrat, où le substrat comprend le métal, le plastique, le bois, le béton, le verre, le papier, la brique, le ciment, l'argile, les roches, les pierres, le tissu, la céramique, la mousse synthétique, le gypse, le plâtre de Paris, le mastic, le stuc ou les composites.

12. Un procédé de fabrication d'une composition de revêtement consistant à combiner
(a) un liant organique ; et,
(b) une combinaison de
(i) polysiloxane hydrolysable ou hydrolysé, et
(ii) polysiloxane à fonction époxy,
dans laquelle le liant organique (a) est choisi dans le groupe constitué par les résines acryliques, les résines vinyl-acryliques, l'acétate de vinyle/éthylène (VAE), les résines alkydes, les résines époxy, le latex, l'asphalte, le polyester, la mélamine-formaldéhyde, le phénol-formaldéhyde, le polyamide, l'isocyanate, les alkydes, les résines de mélamine, et leurs combinaisons,
et
dans lequel le (b)(i) polysiloxane hydrolysable ou hydrolysé contient au moins une fonctionnalité -Si(R)₃₋ₓ(OR*)ₓ dans laquelle chaque R est un alkyle de 1 à 6 atomes de carbone, R* est indépendamment H ou un alkyle de 1 à environ 6 atomes de carbone, et x est un nombre entier de 1 à 3.

13. Une composition de revêtement fabriquée par le procédé de la revendication 12.

14. Une peinture comprenant la composition de revêtement de la revendication 13.

15. Un article revêtu [ou substrat] comprenant la peinture de la revendication 14 appliquée sur un substrat, où le substrat comprend le métal, le plastique, le bois, le béton, le verre, le papier ou la brique.
